**Europäisches Patentamt**

**European Patent Office**

**Office européen des brevets**

(19)

(11) Veröffentlichungsnummer: **0 046 872**
**B1**

(12) **EUROPÄISCHE PATENTSCHRIFT**

(45) Veröffentlichungstag der Patentschrift: **24.04.85**

(51) Int. Cl.⁴: **F 02 B 37/12**

(21) Anmeldenummer: **81105779.3**

(22) Anmeldetag: **22.07.81**

(54) **Kolbenbrennkraftmaschine mit einem Abgasturbolader.**

(30) Priorität: **27.08.80 DE 3032218**

(43) Veröffentlichungstag der Anmeldung:
**10.03.82 Patentblatt 82/10**

(45) Bekanntmachung des Hinweises auf die
Patenterteilung:
**24.04.85 Patentblatt 85/17**

(84) Benannte Vertragsstaaten:
**FR GB SE**

(56) Entgegenhaltungen:
**DE-A-2 716 470**
**DE-A-2 745 153**
**DE-A-2 823 067**
**DE-A-2 835 452**
**FR-A-2 401 313**
**GB-A-2 034 402**
**US-A-4 174 617**

**AUTOMOTIVE ENGINEERING, Band 88, Nr. 7,
Juli 1980, New York "Automatic Anti-Knock for
Turbocharger" Seite 95
Patent Abstracts of Japan Band 4, Nr. 64, 14
Mai 1980 Seite 38M11**

(73) Patentinhaber: **AUDI NSU AUTO UNION
Aktiengesellschaft
Postfach 220 Ettingerstrasse
D-8070 Ingolstadt (DE)**

(72) Erfinder: **Werner, Axel
Kraibergstrasse 21
D-8070 Ingolstadt (DE)**

Courier Press, Leamington Spa, England.

EP 0 046 872 B1

## Beschreibung

Die Erfindung betrifft eine Kolbenbrennkraftmaschine mit einem Abgasturbolader gemäß dem Oberbegriff des Anspruches 1.

Abgasturbolader werden in jüngerer Zeit zunehmend an Brennkraftmaschinen für Personenkraftwagen eingesetzt, um deren Leistung zu steigern, ohne den Hubraum der Brennkraftmaschine vergrößern zu müssen.

Aus der GB—A—2 034 402 ist eine gattungsgemäße Kolbenbrennkraftmaschine mit einem Abgasturbolader bekannt, bei der vor und nach der Drosselklappe der Druck abgenommen wird und über eine Druckdose das Abblasventil in seiner Öffnung gesteuert wird. Als Steuerungsgröße wird dabei die Druckdifferenz ausgewertet. Dabei wird jedoch der Druck selbst herangezogen, um die Kraft zur Betätigung des Abblasventiles zur erzeugen. Die dabei auftretenden Druckunterschiede sind jedoch häufig so, daß die Absolutgrößen der dabei auftretenden Drücke nicht ausreichen, um das Abblasventil ausreichend zu öffnen. Eine derartige Einrichtung ist deshalb für Kennlinien oder Kennfeldsteuerung nicht einsetzbar. Die Größe der Druckunterschiede ist nicht ausreichend, um eine mechanische Öffnung des Abblasventiles in ausreichendem Maße zu erzeugen, um damit eine bestimmten Kennfeldpunkt, der aufgrund der Parameter gewünscht wird, zu erreichen.

Aufgabe der Erfindung ist es, eine gattungsgemäße Brennkraftmaschine mit Steuerung des Öffnungsgrades des Abblasventiles aufgrund der Druckdifferenz über der Drosselklappe zu schaffen, bei der die Steuerung des Abblasventiles über Kennfelder durchgeführt werden kann.

Die Aufgabe wird gelöst durch den Anspruch 1.

Aus der DE—A—2 716 470 ist es ebenfalls bekannt, einen Abgasturbolader nach Maßgabe des Differenzdruckes zu steuern, jedoch ist auch die dort vorgeschlagene Lösung nicht kennfeldgeeignet. Weiterhin ist es prinzipiell beispielsweise aus der DE—A—2 835 452 oder der JP—A—55-29033 bekannt, die Drehzahl als Steuerungsparameter zu verwenden, die Verwendung der Drosselklappenstellung wird in der US—A—4 174 617 vorgeschlagen. Diese zuletzt genannten Schriften betreffen jedoch keine gattungsgemäße Brennkraftmaschine.

Erfindungsgemäß werden die Soll-Werte für die Druckdifferenz aus Kennfeldern ermittelt. Eine unnötig hohe Druckdifferenz über der Drosselklappe wird vermieden, indem das Abblasventil jeweils nur soweit geöffnet wird, daß sich eine von den jeweiligen Betriebsbedingungen der Kolbenbrennkraftmaschine abhängiger, optimaler Wert der Druckdifferenz der Drosselklappe einstellt. Durch eine Kennfeldermittlung des optimalen Wertes ist ein sehr genaues Einstellen und Anpassen an die übrigen Betriebsparameter möglich. Der Abgasturbolader fördert jeweils nur so viel Frischluft, wie sie für einen optimalen Betrieb notwendig ist. Durch eine Steuerschaltung, die in Abhängigkeit von den Logikausgangssignalen einen Stellmotor ansteuert, ist es nicht notwendig, große Energien zum Einstellen des Öffnungsgrades des Abblasventiles durch die Drücke bzw. Druckdifferenzen im Saugrohr aufzuwenden, vielmehr wird der Stellmotor extern kraftbeaufschlagt.

Durch eine genaue Kennfeldsteuerung der optimalen Druckdifferenz kann man die Vorteile, die die Begrenzung des Druckabfalles über der Drosselklappe mit sich bringt, besonders gezielt ausnutzen. Zu den Vorteilen gehört beispielsweise:

a) infolge der geringeren Verdichtung in der Ladestufe wird die Ladelufttemperatur vermindert.

b) die Drosselklappe muß weniger weit geschlossen werden, was zu Verminderung der Drosselverluste führt.

c) der Abgasdruck vor der Abgasturbine sinkt, und

d) die Abgastemperatur nimmt ab.

Die geringeren Temperaturen und der geringere Abgasgegendruck vermindern die Klopfneigung und erlauben damit frühere Zündwinkel, was in Verbindung mit Entdrosselung zu Wirkungsgradverbesserungen führt.

Anspruch 2 kennzeichnet eine besonders zweckmäßig Ausbildung der Erfindung, bei der die Soll-Werte des Druckunterschiedes über die Drosselklappe auch durch einen Klopfsensor und einen Temperatursensor bestimmt werden.

Bei der Ausführungsform gemäß Anspruch 3 wird bei einer Betätigung des Gaspedals über die voll geöffnete Stellung der Drosselklappe hinaus die Leistung der Brennkraftmaschine nur noch durch die Ansteuerung des Abblasventiles, d.h. den Ladedruck, gesteuert bzw. bestimmt.

Die Erfindung kann für alle Arten von Brennkraftmaschinen verwendet werden, bei denen zwischen der Laderstufe des Abgasturboladers und der Brennkraftmaschine eine Drosselklappe angeordnet ist. Besonders gut geeignet ist die Erfindung für fremdgezündete Kolbenbrennkraftmaschinen mit herkömmlicher Leistungssteuerung mittels einer Drosselklappe.

Die Erfindung wird im folgenden anhand schematischer Zeichnungen beispielsweise und mit weiteren Einzelheiten erläutert.

Es stellen dar:

Fig. 1 ein Schema einer mit Abgasturbolader ausgerüsteten Brennkraftmaschine,

Fig. 2 ein Blockschaltbild einer ersten Ausführungsform der Ansteuerung eines Abblasventils und

Fig. 3 ein Blockschaltbild einer zweiten Ausführungsform einer Ansteuerung des Abblasventils.

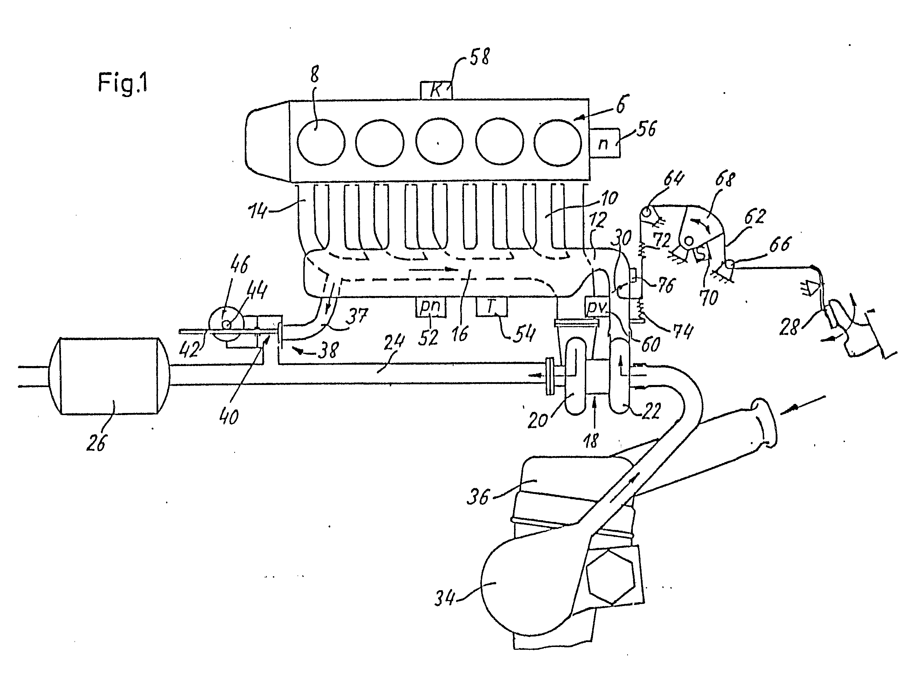

Gemäß Fig. 1 weist eine Brennkraftmaschine 6 mehrere Zylinder 8 auf, in denen nicht dargestellte Kolben arbeiten. Jeder Zylinder 8 ist über eine Saugleitung 10 mit einem Saugrohr 12 (durchgehend gezeichnet) und über eine Auslaßleitung 14 mit einem Abgaskrümmer 16 verbunden.

An den Abgaskrümmer 16 ist ein insgesamt mit 18 bezeichneter Abgasturbolader angeschlossen, der auf einer gemeinsamen Welle eine Abgasturbine 20 und eine Ladeturbine 22 aufweist. Von der Abgasturbine 20 führt ein Abgasrohr 24 zu einem Schalldämpfer 26 des Auspuffs der Brennkraftmaschine.

Der Auslaß der Ladeturbine 22 ist mit dem Saugrohr 12 verbunden. Im Einlab in des Saugrohr 12 sitzt eine mit einem Gaspedal 18 zusammenwirkende Drosselklappe 30.

Am Einlaß der Ladeturbine 22 ist eine Luftdurchsaztmeßeinrichtung (34) angeordnet, die den Durchsatz der von der Ladeturbine 22 durch eine Luftfilter 36 hindurch angesaugten Frischluft mißt. Die Luftdurchsatzmeßeinrichtung 34 arbeitet mit einer Einspritzanlange zusammen, mittels der in jede Saugleitung 10 ein dem Luftdurchsatz entsprechende Kraftstoffmenge eingespritzt wird.

An den Abgaskrümmer 16 ist über eine Verbindungsleitung 37 ein Abblasventil 38 angeschloseen, durch das hindurch die Abgase der Brennkraftmaschine 6 unter Umgehung der Abgasturbine 20 unmittelbar in das Abgasrohr 24 entweichen können. Dieses Abblasventil 38 weist ein Verschlußglied 40 mit einem Schaft 42 auf, welcher beispielsweise über eine Verzahnung mit einem Ritzel 44 eines Stellmotors 46 zusammenwirkt.

Zur Messung des im Saugrohr 12 stromunterhalb der Drosselklappe 30 herrschenden Druckes ist ein Druckfühler 52 und zur Messung der im Saugrohr herrschenden Temperatur ein Temperaturfühler 54 vorgesehen. Zur Messung der Drehzahl der Brennkraftmaschine 6 ist ein Drehzahlmesser 56 vorgesehen Klopfende Verbrennung läßt sich mit einem Klopfsensor 58 feststellen, der an einer geeigneten Stelle des Motorblocks der Brennkraftmaschine 6 befestigt ist. Zur Messung des Druckes im Saugrohr 12 stromoberhalb der Drosselklappe (30) ist ein weiterer Druckfühler 60 vorgesehen.

Die Übertragung der Betätigung des Gaspedals 28 auf die Drosselklappe 30 erfolgt mittels eines Seilzuges 62, welcher über zwei ortsfeste Rollen 64 und 66 und ein drehbare Segmentscheibe 68 läuft, an welcher ein Stellungsfühler 70 angebracht ist, der ein der Stellung der Drosselklappe 30 entsprechendes Signal abgibt. Zwischen dem Seilzug 62 und einem an der Drosselklappe befestigten Hebel ist eine erste Feder 72 angeordnet, welche stärker ist als eine zweite Feder 74, welche die Drosselklappe in Schließstellung zieht. Der an der Drosselklappe 30 befestige Hebel liegt in voll geöffneter Stellung der Drosselklappe an einem Anschlag an, der gleichzeitig einen Schalter 76 bildet, welcher bei Betätigung des Gaspedals 28 über die voll geöffnete Stellung der Drosselklappe 30 hinaus schließt. In diesem Betätigungsbereich des Gaspedals 28 gibt der Stellungsfühler 70 somit ein Signal ab, welches ein Maß lediglich für die Betätigung des Gaspedals 28 ist.

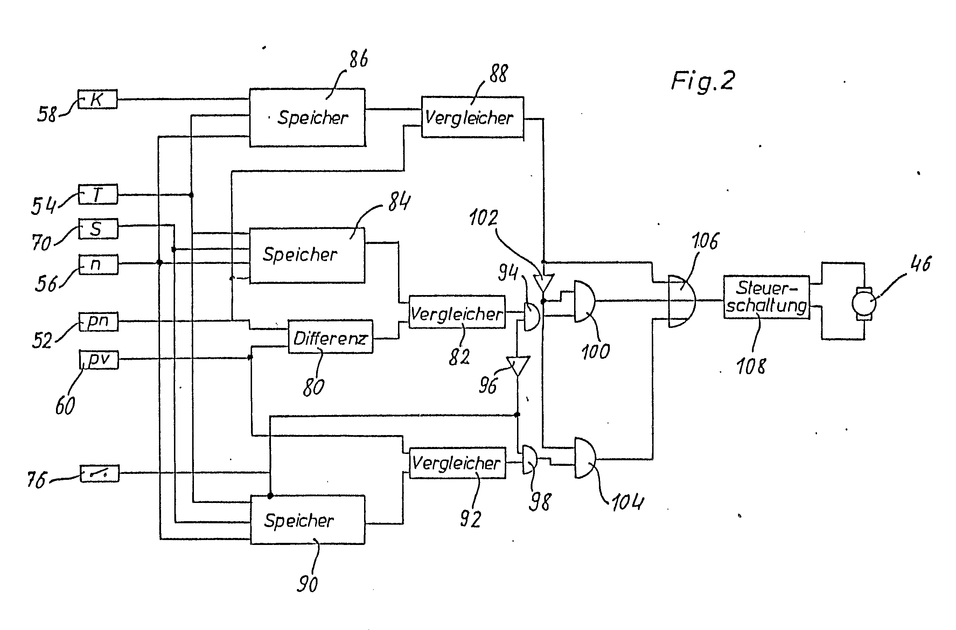

Fig. 2 zeigt ein Blockschaltbild der Zusammenschaltung der verschiedenen Fühler der Anordnung gemäß Fig. 1 mit dem Stellmotor 46:

Die beiden Druckfühler 52 und 60 sind mit den Eingängen eines Differenzgliedes 80 verbunden, das die Differenz zwischen den bei den von dem Druckfühlern 51 und 60 ausgenommenen Drukken bildet und ein entsprechendes Signal einem Eingang eines Vergleichers 82 zuführt.

Der Druckfühler 52 zur Messung des Druckes stromunterhalb der Drosselklappe 30 ist zusätzlich mit einem Eingang eines programmierbaren Speichers 84 verbunden, dessen andere Eingänge mit dem Drehzahlmesser 56, dem Stellungsfühler 70 und dem Temperaturfühler 54 verbunden sind. In dem Speicher 84 sind den Eingangswerten entsprechende Soll-Werte der Druckdifferenz stromunterhalb und stromoberhalb der Drosselklappe 30 gespeichert, welche dem anderen Eingang des Vergleichers 82 zugeführt werden.

Der Drehzahlmesser 56, der Temperaturfühler 54 und der Klopfsensor 58 sind mit Eingängen eines weiteren Speichers 86 verbunden, in dem jeweils maximal zulässige Werte des Druckes stromunterhalb der Drosselklappe 30 gespeichert sind, welche in einem weiteren Vergleicher 88 mit den jeweiligen Ist-Werten des Druckes stromunterhalb des Drosselklappe 30 verglichen werden.

Ein weiterer Speicher 90, welcher mit dem Temperaturfühler 54, dem Stellungsfühler 70 und dem Drehzahlmesser 56 verbunden ist, tritt bei Schließen des Schalters 76 in Funktion und enthält Soll-Werte des Saugrohrdruckes, welche bei voll geöffneter Drossekklappe 30 in Abhängigkeit von der Saugrohrtemperatur, der Drehzahl der Brennkraftmaschine und der Stellung des Gaspedals 28 erreicht werden sollen. Entsprechend ist der Ausgang des Speichers 90 mit einem weiteren Vergleicher 92 verbunden, dem das Signal des Druckfühlers 60 zugeführt wird.

Der Ausgang des Vergleichers 82 ist mit einem ersten UND-Glied 94 verbunden, dessen anderer Eingang über einen Inverter 96 mit dem Schalter 76 und einem Eingang eines zweiten UND-Gliedes 98 verbunden ist, dessen anderer Eingang mit dem Vergleicher 92 verbunden ist.

Der Ausgang des ersten UND-Gliedes 94 ist mit einem Eingang eines dritten UND-Gliedes 100 verbunden, dessen anderer Eingang über einen Inverter 102 mit dem Vergleicher 88 verbunden ist.

Der Ausgang des Inverters 102 ist ebenfalls mit einem Eingang eines vierten UND-Gliedes 104 verbunden, dessen anderer Eingang mit dem Ausgang des UND-Gliedes 98 verbunden ist.

Die Eingänge eines ODER-Gliedes 106 sind mit dem Vergleicher 88, dem dritten UND-Glied 100 und dem vierten UND-Glied 104 verbunden.

Der Ausgang des ODER-Gliedes 106 ist über eine Steuerschaltung 108 mit dem Stellmotor 46 (Fig. 1) verbunden.

Die Funktion der beschriebenen Schaltung ist folgende:

Sei zunächst angenommen, daß die Brennkraftmaschine mit teilweise geöffneter Drosselklappe betrieben wird und der Druck im Saugrohr 12 stromab der Drosselklappe unter einem höchst zulässigen Druck liegt. Der Vergleicher 88 liefert dann kein Signal, so daß das UND-Glied 100 durchlässig ist und das UND-Glied 98 gesperrt ist.

Der Speicher 84 liefert eine Soll-Wert, welcher im Vergleicher 82 mit dem Ist-Wert der Differenz zwischen den Drücken stromoberhalb und stromunterhalb der Drosselklappe 30 verglichen wird. Das UND-Glied 94 ist wegen des Inverters 96 und des geöffneten Schalters 76 durchlässig, so daß Ergebnis des Vergleichers durch das UND-Glied 100 und das ODER-Glied 106 hindurch zur Steuerschaltung 108 gelangt und dort eine Ansteuerung des Stellmotors 46 in Richtung einer Verringerung des Ergebnisses des Vergleichers 82 hervorruft. Ist die Differenz zwischen dem Druck stromoberhalb und dem Druck stromunterhalb der Drosselklappe 30 beispielsweise zu groß und liefert der Vergleicher 82 also ein positives Ausgangssignal, so betätigt die Steuerschaltung 108 den Stellmotor in Richtung eine Öffnung des Abblasventils 38, wodurch der Druck stromoberhalb der Drosselklappe sinkt.

Steigt der Druck stromunterhalb der Drosselklappe 40 über einen bei der jeweiligen Drehzahl und der Saugrohrtemperatur der Brennkraftmaschine höchst zulässigen Wert an, so gibt der Vergleicher 88 ein positives Signal ab, welches das UND-Glied 100 sperrt und über das ODER-Glied 106 die Steuerschaltung 108 ansteuert und zu einer zunehmenden Öffnung des Abblasventils führt. Ebenso wird der Vergleicher 88 bei klopfender Verbrennung aktiviert und öffnet das Abblasventil 38.

Wird nun die Drosselklappe 30 voll geöffnet, so schließt der Schalter 76, wodurch das UND-Glied 94 sperrt und das UND-Glied 98 durchlässig wird. Bei einer Gasbetätigung über die voll geöffnete Stellung der Drosselklappe hinaus wird somit der Speicher 90 wirksam, wodurch die Steuerschaltung 108 nur noch in Abhängigkeit eines Vergleichers zwischen einem Soll-Wert des Saugrohrdruckes und einem von Druckfühler 60 emittelten Ist-Wert angesteuert wird. Bei voll geöffneter Stellung der Drosselklappe 30 und zunehmender Stellung des Gaspedals 28 erfolgt die Leistungssteuerung somit ausschließlich über das Abblasventil 38. Wird in diesem Zustand der höchst zulässige Saugrohrdruck überschritten oder tritt klopfende Verbrennung auf, so tritt wiederum der Vergleicher 88 in Aktion, wodurch das UND-Glied 104 sperrt und die Steuerschaltung 108 unmittelbar vom Vergleicher 88 angesteuert wird.

Es versteht soch, daß zahlreiche Abänderungen der beschriebenen Schaltung möglich sind, von denen imfolgenden einige erläutert seien:

Beispielsweise kann der Speicher 84 nur mit dem Drehzahlmesser 56 und dem Stellungsfühler 70 verbunden sein und entsprechend nur von den Größen der jeweiligen Fühler abhängige Soll-Werte enthalten. Bei dieser Abwandlung ergibt sich ein gleichmäßiger Betrieb der Brennkraftmaschine, bei der die Drosselklappenstellung nicht ständig korrigiert werden, muß. Die im Speicher 84 gespeicherten Soll-Werte werden vorteilhafterweise im Hinblick auf minimalen Verbrauch der Brennkraftmaschine ermittelt.

Die im Speicher 90 abgespeicherten Werte dagegen werden vorteilhafterweise im Hinblick auf zusammen mit zweckmäßigen Zündzeitpunkten optimale Leistung der Brennkraftmaschine ermittelt.

Der Temperaturfühler 54 kann zumindest wenn kein Ladeluftkühler vorgesehen ist, auch so angeordnet sein, daß et die jeweilige Temperatur der Außenluft, bzw. in den Lader eintretende Luft, mißt. Dadurch werden mögliche Selbstregeleffekte vermieden, die dadurch bedingt sind, daß die Temperatur im Saugrohr von der Komprimierung der Luft in der Ladeturbine 22 und der Expansion beim Umströmen der Drosselklappe 30 abhängt.

Im Leerlauf der Brennkraftmaschine, d.h. bei geschlossener Drosselklappe ist das Abblasventil 38 vorteilhafterweise vollständig geschlossen, was mittels eines unmittelbar von der Drosselklappe betätigten Schalters erreicht werden kann.

Die Drosselklappe 30 kann vollelektronisch entsprechend im Speicher 84 gespeicherten Werten betätigt sein. In diesem Falle kann die mechanische Verbindung zwischen Gaspedal 28 und Drosselklappe 30 entfallen.

Zur Betätigung des Abblasventils 38 muß nicht notwenigerweise ein elektrischer Stellmotor 46 vorgesehen sein. Vorteilhaft ist eine Betätigung mittels eines pneumatischen oder hydraulischen Stellmotors, welcher schwingungsunempfindlicher ist bzw. in sener Montage freier wählbar ist.

Bei hydraulischer Betätigung kann als Arbeitsmittel Motoröl oder Flüssigkeit verwendet werden, welche von einem hydraulischen Hilfsantrieb abgezweigt wird, beispielsweise einer hydraulischen Lenkhilfeeinrichtung.

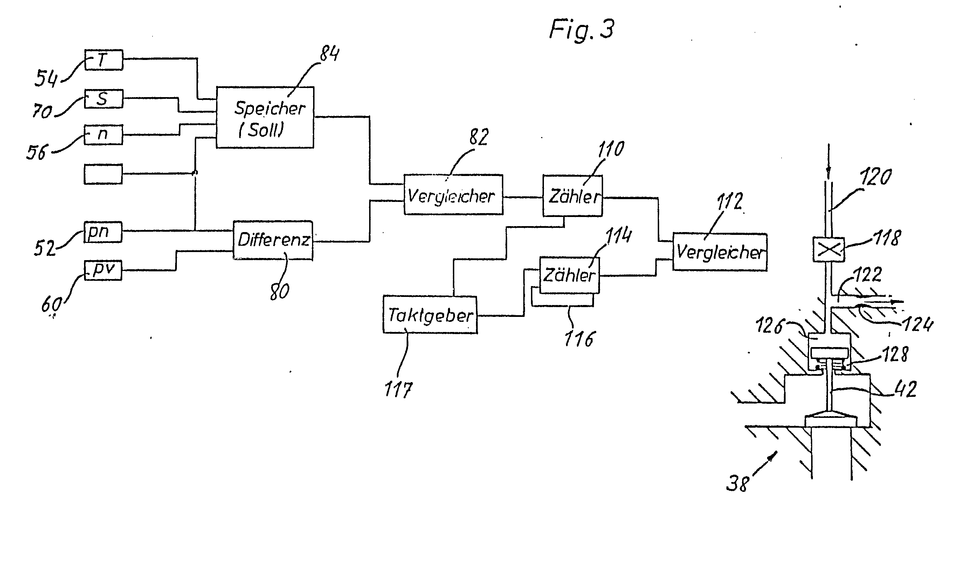

Fig. 3 zeigt eine solche Ausführungsform:

Der Vergleicher 82 ist bei dieser Ausführungsform an einen Zähler 110 angeschlossen, dessen Ausgang mit einem Vergleicher 112 verbunden ist. Ein weiterer Eingang des Vergleichers 112 ist mit einen Ringzähler 114 verbunden, der über eine Rücksetzleitung 116 jeweils auf Null zurückspringt, wenn er seinen maximalen Zählstand erreicht hat. Zur Ansteuerung der Zähler 110 und 114 ist ein Taktgeber 117 vorgesehen.

Der Ausgang des Vergleichers 112 ist mit einem Magnetventil 188 verbunden, das in einer mit konstantem Druckmitteldruck beaufschlagten Leitung 120 sitzt. Stromab des Magnetventils 118 ist eine Abströmleitung 122 mit einer Drossel 124 vorgesehen. Mit dem Druck stromab des Magnetventils 118 ist ein Arbeitsraum 126 beaufschlagt, in dem gegen die Kraft einer Feder 128 ein Kolben arbeitet, der mit dem Schaft 42 des Abblasventils 38 verbunden ist.

Die Funktion der einzelnen, in ihrem Aufbau an sich bekannten Bauteile ist folgende:

Der Zähler 110, der vom Taktgeber 117 angesteuert wird, erhöht mit jedem Takt seinen Zählstand bei einem positiven Ausgang des Vergleichers 82 und vermindert seinen Zählstand bei einem negativen Ausgang des Vergleichers 82.

Der Zähler 114 wird mit einer wesentlich größeren Taktfrequenz angesteuert als der Zähler 110.

Der Vergleicher 112 öffnet das Magnetventil 118, wenn der Zählstand des Zählers 114 größer als der Zählstand des Zählers 110 ist.

Die Funktion der gesamten Schaltung ist folgende:

Es sei angenommen, daß die Differenz zwischen den Druck stromoberhalb und stromunterhalb der Drosselklappe 30 zu groß ist, der Vergleicher 82 also ein positives Ausgangssignal erzeugt. Der Zähler 110 erhöht dann seinen Zählstand, so daß die Zeitdauer, während der der Zählstand des Zählers 114 größer ist als der Zählstand des Zählers 110 abnimmt. Dies führt dazu, daß die Zeitdauer, während der das Magnetventil 118 vom Vergleicher 112 aus geöffnet wird, abnimmt. Der Druck stromab des Magnetventils 118 sinkt dadurch, wodurch das Abblasventil 38 zunehmend geöffnet wird und die Druckdifferenz stromoberhalb und stromunterhalb der Drosselklappe abnimmt.

Es versteht sich, daß die Anordnung gemäß Fig. 3, entsprechend der Anordnung gemäß Fig. 2 durch die Schaltungsteile ergänzt werden kann, welche bei unzulässig hohem Saugrohrdruck, klopfender Verbrennung bzw. voll geöffneter Drosselklappe wirksam werden.

Auch kann das Magnetventil 118 in der Abströmleitung 122 und die Drossel 124 in der Leitung 120 angeordnet sein. Bei dieser Ausführungsform kann das Abblasventil 38 durch Öffnen des Magnetventils 118 besonders rasch geöffnet werden.

### Patentansprüche

1. Kolbenbrennkraftmaschine mit einem Abgasturbolader (20, 22) und einem Abblasventil (40), mit Sensoren (52, 60) zur Erfassung des Druckes stromaufwärts und stromabwärts der Drosselklappe (30), mit einer Steuerung für die Öffnung des Abblasventiles (40) nach Maßgabe der Differenz der Drücke stromaufwärts und stromabwärts der Drosselklappe (30), wobei gespeicherte Soll-Werte vorgegeben sind, deren Überschreiten zu einem Öffnen des Abblasventils (40) führt, gekennzeichnet durch eine Logik (Fig. 2, 3), die über Sensoren (56, 70) Informationen über die Drehzahl und die Drosselklappenstellung erhält, wobei im Speicher (84) die Soll-Werte als Kennfelder in Abhängigkeit auch von Drehzahl und Drosselklappenstellung gespeichert sind, und ein Steuerschaltung (108), die in Abhängigkeit von den Logikausgangssignalen einen Stellmotor (46) zum Einstellen des Öffnungsgrades des Abblasventils (40) ansteuert.

2. Brennkraftmaschine nach Anspruch 1, dadurch gekennzeichnet, daß der Logik (Fig. 2, 3) Informationen auch von einem Klopfsensor (56) und einem Temperatursensor (54) zugeführt werden.

3. Brennkraftmaschine nach Anspruch 1 oder 2, dadurch gekennzeichnet, daß in der Logik Soll-Werte für die Öffnung des Abblasventils (40) in Abhängigkeit von Drosselklappenstellung Drehzahl und Temperatur gespeichert sind und bei voll geöffneter Drosselklappe verglichen wird, um die Leistungsabgabe der Brennkraftmaschine über das Abblasventil (40) zu steuern.

### Revendications

1. Moteur à combustion interne à pistons avec turbosoufflante à gaz d'échappement (20, 22) et soupape d'évacuation (40), comportant des détecteurs (52, 60) pour déterminer la pression en amont et en aval du papillon des gaz (30) et une sommande pour l'ouverture de la soupape d'évacuation (40) en fonction de la différence des pressions en amont et an aval du papillon des gaz (30), des valeurs de consigne mémorisées, dont le dépassement provoque une ouverture de la soupape d'évacuation, étant pré-définies, caractérisé par un logique (fig. 2, 3) qui reçoit, au moyen de détecteurs (56, 70) des informations sur la vitesse de rotation et la position du papillon des gaz, les valeurs de consigne étant enregistrées dans la mémoire (84) en tant que champs caractéristiques en fonction aussi de la vitesse de rotation et de la position du papillon des gaz, et par un circuit de commande (108) qui active un moteur de positionnement (46) en fonction des signaux de sortie de la logigue pour le réglage du degré d'ouverture de la soupape d'évacuation (40).

2. Moteur à combustion interne selon la revendication 1, caractérisé en ce que des informations provenant d'une détecteur de cognement (56) et d'une sonde de température (54) parviennent aussi à la logique (fig. 2, 3).

3. Moteur à combustion interne selon la revendication 1 ou 2, caractérisé en ce que des valeurs de consigne pour l'ouverture de la soupape d'évacuation (40) en fonction de la position du papillon des gaz, de la vitesse de rotation et de la température sont enregistrées dans la logique et, lorsque le papillon des gaz est complètement ouvert, une comparaison est effectuée pour commander la puissance débitée du moteur à combustion interne au moyen de la soupape d'évacuation (40).

### Claims

1. Internal combustion engine having an exhaust gas turbine (20, 22) and a relief valve (40), sensors (52, 60) for sensing the pressure upstream and downstream of a throttle valve (30), a control means for the opening degree of the relief valve (40) in accordance with the difference of the pressures upstream the throttle valve (30), and downstream respectively, whereby stored desired values are predetermined the exceeding of which is causing the opening of the relief valve (40), characterized by a logic unit (Fig. 2, 3) receiving information of the engine speed and the throttle valve position by sensors (84, 90), said desired values being stored in the memories (84, 90) as maps depending also from the speed and the throttle valve position, and a control circuit (108) controlling an actuating motor (46) for determining the opening degree of the relief valve (40) in dependence from the logic output signals.

2. Internal combustion engine according to claim 1, characterized in that the logic unit (Fig. 2, 3) also receives informations from a knock sensor (56) and a temperature sensor (54).

3. Internal combustion engine according to claims 1 and 2, characterized in that desired values for the opening of the relief valve (40) in dependence from the throttle valve position, the engine speed and the temperature are stored in the logic unit, said values being compared when the throttle valve is in its fully open position in order to control the power of the engine by the relief valve (40).

Fig.1

0 046 872

Fig.2

0 046 872

Fig. 3